(19)

Europäisches
Patentamt
European
Patent Office
Office européen
des brevets

(11) **EP 2 233 014 A1**

(12) **EUROPEAN PATENT APPLICATION**
published in accordance with Art. 153(4) EPC

(43) Date of publication:
**29.09.2010 Bulletin 2010/39**

(21) Application number: **08865375.3**

(22) Date of filing: **22.12.2008**

(51) Int Cl.:
**A23G 7/00** (2006.01)

(86) International application number:
**PCT/JP2008/073358**

(87) International publication number:
**WO 2009/081916 (02.07.2009 Gazette 2009/27)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **20.12.2007 JP 2007329170**

(71) Applicant: **Fuji Oil Company, Limited
Chuo-ku
Osaka-shi
Osaka 542-0086 (JP)**

(72) Inventors:
• **KATO, Masaharu
Izumisano-shi
Osaka 598-8540 (JP)**

• **UGA, Hiroko
Izumisano-shi
Osaka 598-8540 (JP)**
• **KURAMORI, Koichi
Izumisano-shi
Osaka 598-8540 (JP)**
• **MOTOIKE, Hideki
Izumisano-shi
Osaka 598-8540 (JP)**

(74) Representative: **Hayes, Adrian Chetwynd et al
Boult Wade Tennant
Verulam Gardens
70 Gray's Inn Road
London WC1X 8BT (GB)**

(54) **OILY FOOD AND METHOD FOR PRODUCING THE SAME**

(57) An object of the invention is to develop an oily food which has low viscosity relative to the oil content, (that is, if the viscosity is comparable, the food has a lower oil content and thus has a lower calorie, and if the oil content is comparable, the food has a lower viscosity), excellent taste, physical property and coating aptitude by an inexpensive and simple method and a method for producing the same. The present inventors made intensive studies for achieving the above object. As a result, a low-oil content and low-calorie oily food which can exhibit a lower viscosity if the oil content is comparable, and can achieve a lower oil content if the viscosity is compa-

rable as compared with a conventional oily food material, has good texture and flavor, and can be variously applied can be produced by a simple method by subjecting dough after undergoing a refining step to conching at a lower oil content than conventional, preferably at a lower temperature thereby to change a dry state to a liquid state, that is, by performing conching in a state of a low fluidity thereby to apply high shear and to discharge oil and fat which is incorporated in tissue and does not contribute to the fluidity outside the tissue.

**Description**

Technical Field

The present invention relates to an oily food which has a lower viscosity if an oil content is comparable as compared with the conventional oily food, or has a lower oil content if a viscosity is comparable as compared with the conventional oily food, and a method for producing the same.

Background Art

As the oily food, a chocolate and a chocolate-like food are exemplified, and a typical oily food is produced from cacao mass, cocoa butter, sugar, powdered milk and the like.

Many of these oily foods are a food having a relatively high oil content containing 30% or more of a fat or oil content in the case of a confectionary made from chocolate alone, or 40% or more of a fat or oil content in the case of a utility for coating bread, baked confectionary, ice cream and the like.

In addition, since a fat or oil has a high calorie, people fearing obesity or metabolic syndrome tend to avoid a high oily food.

However, an oil content of the chocolate influences on a variety of physical properties including a viscosity and, consequently, workability, and also influences on an eating feeling and a flavor originally possessed by the oily food. Particularly, there has been a problem that when an oil content is reduced by a method of simply reducing a blending amount of a fat or oil, a viscosity is considerably increased, combinatorial working with other food (such as coating and enrobing) becomes difficult, an adhered amount is increased due to a rise in a viscosity, and further, even when used alone without combination, it becomes difficult to cast into a mold in every corner.

In addition, since the oily food called "smoothly melted in the mouth" has a fine granularity of a solid matter, and has a great surface area contacting with an oily phase as a whole, when a fat or oil is spread all over a surface thereof, and a fat or oil contributing to fluidity of the oily food is decreased, a viscosity is increased.

That is, in order to make a fine granularity and reduce a viscosity, previously, it was necessary to increase an oil content and, when a granularity is coarser in order to reduce an oil content, even if a low oil content and a viscosity are suppressed to those of current products, smoothness of melting in the mouth of the existing oily food is greatly deteriorated, becoming a rough eating feeling.

Like this, if an oil content can be decreased, particularly an oil content can be decreased without greatly changing other physical properties such as viscosity from a range of current products, this can contribute to a market.

Concerning reduction in a calorie of the oily food, some approaches have been already made. Reduction in a calorie has been tried by the technique of aiming at a low calorie by modifying a composition of a fat or oil and a structure of a fat or oil without reducing an oil content, for example, a method of replacing a part or all of a fat or oil with a fat or oil substitute such as polyester and polyether (e.g. Patent Document 1, Patent Document 2, Patent Document 3, Patent Document 4, Patent Document 5), or by introducing a long chain fatty acid or the like into triglyceride to modify a fat or oil itself, rendering it hardly digestible (e.g. Patent Document 6, Patent Document 7).

However, in the oily food including a chocolate, in order to obtain better melting in the mouth, it is necessary to solidify a fat or oil containing much symmetric triacylglycerol to a particular crystal form, for this reason, there is a problem that simple replacement with a fat or oil substitute, and introduction of a long chain fatty acid or the like easily leads to deterioration in melting in the mouth.

In addition, a method of producing a low oil content and low calorie chocolate by decreasing a fat or oil content in the chocolate, and replacing a sweetener with a sugar alcohol has been proposed (e.g. Patent Document 8, Patent Document 9), but a fat or oil content in the chocolate substantially exceeds 25% by weight, and lowering in a calorie regarding a respect of a low oil content is not still sufficient. That is, when a fat or oil content is too small, each raw material remains in the powdery state and is not collected as a dough in mixing of a refining step, and later working becomes difficult, such as inability to mix or perform roll refining. That is, for roll refining, an extent of a viscosity is necessary and, in the powdery state, a raw material is slipped, and does not enter a roll. Therefore, in order that each raw material can be sufficiently mixed, and an extent of a viscosity that roll refining can be performed is obtained, it is usually necessary that a fat or oil content is at least around 27% by weight.

Further, a low fat chocolate having an oil content of 20 to 24.5% by weight has been proposed by a method of once dissolving a sugar in water, and dehydrating and drying the solution to prepare a sugar of fine particles (e.g. Patent Document 10). However, this can not be easily produced due to a complex production method, and it is difficult to produce this by the conventional steps or apparatuses.

As an invention of providing low calorie and very tasty chocolates, which do not use particularly a special fat or oil, and can be easily produced by the previous production step, a method of reducing an oil content to 19% by weight to 25% by weight by using a sugar or a particular low absorption sugar and a particular emulsifier jointly has been proposed (e.g. Patent Document 11).

Proposal of Patent Document 11 can realize a low oil content/a low calorie to some extent, but it relies on only using an emulsifier as strategy against a rise in a viscosity accompanied with lowering in an oil content, and it does not describe that an use in low viscosity utility when an oil content is reduced.

Overall, by the current technique, it is difficult to industrially make a low oil content oily food which can suppress physical property such as a low oil content, particularly a viscosity and a granularity to those of current products, and there has been a great demand for a low oil content/low calorie oily food material which is better in an eating feeling and a flavor, and can be supplied to a variety of utilities, and a method of producing the same, from the market.

Patent Document 1: JP 63-301745 A
Patent Document 2: JP 1-137939 A
Patent Document 3: JP 1-252248 A
Patent Document 4: JP 4-237458 A
Patent Document 5: JP 4-356159 A
Patent Document 6: JP 4-325055 A
Patent Document 7: JP 4-346751 A
Patent Document 8; JP 5-260894 A
Patent Document 9: JP 6-506586 A
Patent Document 10: JP 8-504576 A
Patent Document 11: JP 10-099022 A

Disclosure of the Invention

Problems to be Solved by the Invention

An object of the present invention is to develop an oily food which has a low viscosity relative to an oil content, that is, the food has a lower oil content and thus has a lower calorie if a viscosity is comparable, and the food has a lower viscosity if an oil content is comparable, and the food has excellent taste, physical property and coating aptitude by an inexpensive and simple method, and a method for producing the same.

Means for Solving the Problems

The present inventors have made intensive studies for achieving the above object and, as a result, have found out that a low oil content and low calorie oil food which can exhibit a lower viscosity if an oil content is comparable as compared with the conventional oily food material, and can achieve a lower oil content if a viscosity is comparable as compared with the conventional oily food material, has good texture and flavor, and can be variously applied can be produced by a simple method by subjecting a dough after undergoing a refining step to conching at a lower oil content than conventional to change the dry state to the liquid state, resulting in completion of the present invention.

That is, the present invention is:

(1) a method for producing an oily food, **characterized in that** an oil content of a dough to be supplied to refining is less than 25% by weight, and a ratio of a non-oil solid content derived from an oil-containing raw material relative to a total oil content at initiation of a conching step is 0.6 or more;

(2) the method for producing an oily food according to (1), wherein the oil-containing raw material is one or more raw material selected from the group consisting of a cacao mass, a whole milk powder, a cocoa powder, and a toasted soybean flour;

(3) the method for producing an oily food according to any one of (1) to (2), wherein the oil-containing raw material is added after transition of the dry state into the generally wet state, in the conching step;

(4) the method for producing an oily food according to any one of (1) to (3), wherein lecithin and/or polyglycerin-condensed ricinoleic acid ester (PGPR) is added after transition of the dry state into the generally wet state, in the conching step;

(5) the method for producing an oily food according to any one of (1) to (4), wherein sucrose fatty acid ester is added before initiation of the conching step;

(6) an oily food, **characterized in that** a viscosity (unit: p (poise)) of a dough of the oily food at 40°C is lower than a viscosity y of a corresponding oil content x expressed by the following equation: $y = ax^b$,

wherein

    y: viscosity (p)

x: oil content (% by weight)

a:

$$(0.2 + 2.8\exp(-6c)) \times 10^{16}$$

b: -9.4

c: polyglycerin-condensed ricinoleic acid ester (PGPR) contained in oily food (% by weight),

provided that a granularity of the oily food is 30 $\mu$m or less; and

(7) an oily food, **characterized in that** a plastic viscosity (unit: p (poise)) of a dough of the oily food at 45°C is lower than a viscosity y of a corresponding oil content x expressed by the following equation: y' = ax$^b$, wherein

y': plastic viscosity (p)

x: oil content (% by weight)

a:

$$2.5 \times 10^{11}$$

b: -5.43,

provided that a granularity of the oily food is 30 $\mu$m or less.

Effect of the Invention

According to the present invention, there is an advantage that an oily food having a low viscosity relative to an oil content, being excellent in taste, and being excellent in physical property and coating aptitude, which has not previously been seen, can be produced by a simple method.

Best Mode for Carrying Out the Invention

The present invention will be explained in detail below. An oily food referred in the present invention is not particularly limited as far as it is a food in which a fat or oil forms a continuous phase, and one example includes a chocolate or a chocolate-like food, and a glaze (in which a sugar is dispersed in a fat or oil; a glaze is used for overcoating). In addition, the chocolate contains a "chocolate dough" and a "quasi-chocolate dough" according to "Fair Competition Convention on the Show Kind of Chocolate" (March 29, 1971, Fair Trade Commission announcement No.16), refers to one obtained by using a cacao mass prepared from cacao bean, a cacao butter, a cocoa powder and sugars as a raw material and, if necessary, adding other edible fat or oil, milk product, flavor and the like, and undergoing a step of producing chocolate, and also includes so-called white chocolate dough not using a cacao mass.

Examples of the chocolate-like food include a food using other fat or oil (a fat or oil called CBE, which is rich in a 1,3-saturated 2-unsaturated triglyceride-type fat or oil, a fat or oil called CBR, which is a laurin-based or high elaidic acid-type hard butter, and further, a liquid oil containing much unsaturated fatty acid or medium chain fatty acid called ice coating) in place of a part or all of a cocoa butter for the purpose of improving physical property or saving the production cost.

A blending raw material of the oily food will be explained by classifying into a "fat or oil raw material", an "oil-containing raw material" containing a fat or oil, and other "low fat raw material". The fat or oil raw material of the present application refers to a blending raw material in the fat or oil alone state. A kind of the fat or oil is not particularly limited, but a so-called hard butter is suitable, and, a non-tempering-type fat or oil such as trans-type hard butter containing elaidic acid as a constituent fatty acid, and laurin-type hard butter, and a tempering-type fat or oil such as cacao butter, and cacao butter substitute can be utilized. In addition, a modified fat or oil which has been subjected to hardening, fractionation, transesterification or the like of a fat or oil can be utilized. As a raw material, for example, vegetable fats or oils such as rapeseed oil, soybean oil, sunflower seed oil, cottonseed oil, peanut oil, rice bran oil, corn oil, safflower oil, olive oil, kapok oil, sesame oil, evening primrose oil, palm oil, shea butter, sal butter, cacao butter, palm oil, palm kernel oil, as well as modified fats or oils which have been subjected to hardening, fractionation, transesterification or the like of those fats or oils can be exemplified.

The oil-containing raw material in the present application refers to a raw material in which much fat or oil is contained. Unless otherwise is indicated, in the present application, a raw material in which an oil content in the raw material is 2% by weight or more is named an oil-containing raw material.

Typically, an oil-containing raw material used in the conventional chocolate is exemplified. As examples, a cacao mass (oil content: about 55% by weight), a whole milk powder (oil content: about 25% by weight), and a cocoa powder (oil content: about 10 to 25% by weight), and although not used as an original oil raw material of a general chocolate, a toasted soybean flour (oil content: about 23% by weight) are preferably used. In the present invention, the oil-containing raw material is defined as described above, but among the oil-containing raw materials, the effect of the present invention is different due to a higher or lower oil content, and as an oil content of the oil-containing raw material is higher, much fat or oil making no contribution to reduction in a viscosity of the oily food, which is in the original state while strongly retained in a tissue thereof is present, and this is more effective by allowing that the fat or oil is squeezed out more (details of a squeezing out step will be explained in a conching step).

In addition to the foregoing, a skim milk powder (oil content: about 1% by weight) and a whey powder (oil content: about 1% by weight) are also a raw material containing a fat or oil, but in the present invention, a raw material having an oil content of less than 2% is in a category of a low fat raw material.

The low fat raw material refers to a raw material containing no fat or oil, or containing less than 2% of a fat or oil. Without particular limitation, as an example, sugars, sugar alcohols, other sweeteners, a food fiber, and an additive are exemplified.

The sugars and sugar alcohols are not particularly limited, but sugars and sugar alcohols which are used in the conventional chocolate are preferably used. As examples, monosaccharides, oligosaccharides, sugar alcohols, saccharide, thick malt syrup and the like can be exemplified. As monosaccharides, specifically, glucose, fructose, mannose, and xylose can be exemplified. In addition, as oligosaccharides, disaccharides to hexasaccharides are usually included and, specifically, sucrose, maltose, lactose, trehalose, maltotriose and the like can be exemplified. As sugar alcohols, specifically, sorbitol, maltitol, mannitol, erythritol, xylitol, oligo-sugar alcohols and the like can be exemplified.

In addition, in the present invention, sugars and sugar alcohols are not particularly limited, but a sugar which dissociates crystal water with difficulty is desirable and, further, more anhydrous ones are desirable. One example of sugars and sugar alcohols which dissociate crystal water with difficulty includes maltose.

The food fiber is not particularly limited, but an example includes polydextrose, dextrin, crystalline cellulose, cellulose, hemicelluloses, lignin, agar, glucomannan, sodium alginate, and chitosan.

As the additive, an emulsifier which has previously been used in an oily food is preferably used. Desirably, polyglycerin-condensed ricinoleic acid ester and lecithin and, particularly desirably, sucrose fatty acid ester and polyglycerin fatty acid ester, and sorbitan fatty acid ester are preferably used without any particular limitation.

An added amount of sucrose fatty acid ester or polyglycerin fatty acid ester is not particularly limited, and it is preferable that the amount is 0.05% by weight or more, desirably 0.07% by weight or more, further desirably 0.1% by weight or more relative to a total final oily food. When the amount is less than 0.05% by weight, the function of collecting a dough is weak upon conching, and the viscosity decreasing effect due to addition of sucrose fatty acid ester or polyglycerin fatty acid ester is obtained with difficulty.

In addition, it is preferable that an upper limit of the added amount is 3.0% by weight or less, desirably 1.0% by weight or less, further desirably 0.5% by weight or less. When the amount is more than 3% by weight, the effect corresponding to the added emulsifier is obtained with difficulty, being not economic, and a flavor peculiar to the emulsifier is easily manifested in a flavor of a final oily food.

In addition, since the effect of collecting a dough upon conching can be expected from addition of sucrose fatty acid ester or polyglycerin fatty acid ester, the ester is required to be dispersed at least upon conching and, therefore, it is preferable that the ester is added before initiation of a conching step. By subjecting the dough to conching, the viscosity decreasing effect is enhanced. On the other hand, even when sucrose fatty acid ester is added to a dough after conching, to obtain the expected viscosity decreasing effect is difficult.

In addition, while lecithin or PGPR has the function of decreasing a viscosity, since a dough is soft or has fluidity upon conching (the same phenomenon as that in the state where an oil content of a dough subjected to a conching step is high as described later, occurs), the dough is slipped from a blade of a conche, and to apply a shear to the dough sufficiently is difficult. For this reason, it is preferable that lecithin or PGPR is added after brought from the dry state into the generally wet state, in a conching step.

HLB of sucrose fatty acid ester or polyglycerin fatty acid ester is not particularly limited, but the known HLB which has conventionally been used in the oily food can be preferably used and, when HLB is desirably 5 to 16, a force of collecting a dough is strong, and the viscosity decreasing effect is easily obtained.

The constituent fatty acid is not particularly limited, but fatty acid which has previously been used in the oily food is preferably used. The constituent fatty acid is desirably saturated fatty acid, further desirably fatty acid having a carbon number of 16 to 20 is bound because these have a stronger force of collecting a dough, and the viscosity decreasing effect is easily obtained.

The raw materials, namely, cacao mass, sugars, powdered milk, and fat or oil are properly mixed into a plastic mass called a dough, which is subjected to a refining step.

Usually, the refining step is not particularly limited as far as it is a method which can refine the raw material, but typically, a step of roll refining which is frequently used in a step of producing a chocolate is exemplified. Processing by roll refining is desirable in that an additional facility is not necessary, and processing at a large amount is possible in a short time, due to a relatively simple apparatus which is frequently used in a step of producing the conventional oily food.

A blending amount of the fat or oil, the oil-containing raw material, and the low fat raw material is not particularly limited in a final oily food, respectively, it is possible to blend them in a range that is used in the existing oily food. In this respect, an oil content of a dough at subjected to a refining step has previously been usually around 27% by weight, but in the present invention, it is necessary that an upper limit is less than 25% by weight, and desirably less than 23% by weight.

When an oil content of a dough is high at roll refining, phenomenon called that a particle and a roll are "slid" occurs, they become difficult to be subjected to roll refining, and further, this is not suitable for one of the objects of the present application that an oily food having a lower fat or oil content at a viscosity to the same extent is obtained.

On the other hand, when an oil content is low, collecting of a dough is deteriorated, and subjecting to a roll becomes difficult, but there is not particularly a lower limit as far as a dough can be formulated into a roll flake. As an example, 10% by weight or more, desirably 15% by weight or more is preferable.

After the dough is refined to an objective granularity by a method according to a conventional method at a refining step, the refined dough is subjected to a conching step and, when it is not necessary to have a fine granularity of a final oil food (for example, a glaze), a part of the raw material is not subjected to a refining step and this is combined with a remaining which has been subjected to a refining step, which may be subjected to a conching step. In fact, since an oily food having a coarse granularity has a relatively small surface area of a solid matter, the food becomes to have a lower viscosity at the same oil content as compared to an oily food having a fine granularity and, therefore, the function of the present invention is easily felt really in a fine granularity. For this reason, it is preferable that a granularity of the oily food is 30 μm or less, desirably 25 μm or less, most desirably 22 μm or less.

When a population of particles having plural granularity distributions is kneaded, and the particles are distributed in a continuous phase of a fat or oil, it is difficult to measure the granularity distributions as the oily food, and the measurement with a method of measuring the aforementioned granularity is not practical for management of products. Therefore, measurement with a micrometer which is relatively general in oil food manufacturers is used for defining a granularity of the present invention.

More specifically, a melted oily food (when an oil content is less than 50%, the food is diluted with a liquid oil to 50% to 60% of an oil content) is adhered to a measuring surface with a micrometer (for example, a trade name "Digimatic standard external micrometer MDC-M" manufactured by Mitsutoyo Ltd. etc.), and measuring surfaces are approaching to each other. An adhesion amount of the oily food is such the extent of an amount that a width of micrometer measuring surfaces is narrowed at measurement and, at the measured value is indicated, the oily food is protruded from the measuring surface, and the amount is measured at least with an extent that the oily food is uniformly distributed on the measuring surface. When the amount is small, since a sufficient amount of particles are not present in a gap between measuring surfaces, and a measurement error becomes easy to occur, the amount is not used as a measurement value when the oily food is not protruded from the measuring surface. After measurement, the measuring surface is brought into the clean state, the amount is measured again five times by the same procedure, and an average of three times except for maximum and minimum values is defined as a granularity of the oily food.

In the present invention, an oil content of a dough subjected to a conching step is preferably such that an upper limit is less than 25% by weight, desirably less than 23% by weight, further desirably less than 21% by weight, and a lower limit is 15% by weight or more, desirably 18% by weight or more, like the range of an oil content of a dough subjected to a refining step.

In addition, it is necessary that a ratio of a non-oily solid content derived from an oil-containing raw material relative to a total oil content at initiation of a conching step is relatively great, and it is preferable that an oil-containing raw material solid content ratio (relative to an oil )(defined by = (non-oily solid content derived from oil-containing raw material)/(total oil content of dough at initiation of conching step)) is 0.6 or more, desirably 0.7 or more, further desirably 0.8 or more.

When the oil-containing raw material solid content ratio (relative to an oil) is small, since the oil-containing raw material subjected to a conching step is relatively reduced, an absolute amounts of a fat or oil retained in a solid matter, that is, a fat or oil to be squeezed out from the solid matter at dry conching is small, and a viscosity can not be sufficiently lowered. It is thought that a fat or oil in a tissue of the oil-containing raw material does not remain in the interior and a viscosity of the oily food is significantly reduced even in the case of a low oil matter, by the oil-containing low material solid content ratio (relative to an oil) being high, desirably 0.6 or more.

A dough has above mentioned range of the oil content, and the oil-containing raw material solid content ratio (relative to an oil) is relatively high, and further desirably, the sucrose fatty acid ester or the polyglycerin fatty acid ester is added, thereby, the dough has suitable plasticity and collection like a clay, a stronger shear is applied to the dough when a blade of a conche squeezes the dough, and thereby, a fat or oil making no contribution to reduction in a viscosity of the oily food in the original state while strongly retained in a tissue of the oil-containing raw material becomes easy to be effectively squeezed out.

When an oil content of the dough is too high, this is not of course suitable for lowering of an oil content of a final oil content which is one of the objects of the present application, and since the dough is soft and has fluidity, the dough is slipped from a blade of a conche, and a shear cannot be sufficiently applied to the dough.

On the other hand, when an oil content of the dough is too low, the dough in turn is not collected in a clay-like state as a dough, remains smooth flake-like and the dough is slipped from a blade of a conche, therefore, a shear cannot be sufficiently applied to the dough.

The dough subjected to a conching step has first a dough surface in the state of no luster called "dry state" and, by being conched in this dry state, a flake is gradually collected into unity, and brought into the state having a luster called "wet state" via the state having the plasticity called "generally wet state" which is the state of generating plasticity. Usually, when brought into this wet state, a lacked matter of a fat or oil and an emulsifier are added for blending into a final oily food.

In the present application, it is desirable to add a desirable matter of a fat or oil raw material and a emulsifier at least in the "generally wet state", desirably in the "wet state".

In this respect, the emulsifier to be added herein is an emulsifier having the effect of decreasing a viscosity of a final dough other than sucrose fatty acid ester and polyglycerin fatty acid ester for "giving suitable plasticity and collection like a clay" as described above and, as an example, it is desirable to add lecithin or polyglycerin-condensed ricinoleic acid ester (PGPR).

A conching temperature in the dry state is preferably in a lower region when almost all of a fat or oil in the oily food has been melted, without any limitation, but in the oily food of a tempering type such as cocoa butter and CBE, conching is preferably performed at a low temperature of desirably 55°C or lower, further desirably 50°C or lower.

In conching at a low temperature region, a shear is easily applied. As described above, a fat or oil making no contribution to reduction in a viscosity of the oily food in the original state while strongly retained in a tissue of the oil-containing raw material becomes easy to be squeezed out effectively.

Unless conching is performed at a sufficiently low temperature, easiness of application of a shear at least depending on a temperature becomes similar to that of the conventional products, and the reducing effect is only at an extent of a viscosity corresponding to an oil content, or an oil content corresponding to a viscosity.

It is preferable that a conching time in the dry state is long, or conching is performed under a strong shearing stress. It is preferable that the time is usually 30 minutes or longer, desirably 60 minutes or longer, being not limiting.

In addition, also in a step of producing the conventional oily food, the food is first in the "dry state" when subjected to a conching step, but the oily food transitions into the "wet state" more rapidly than the present invention because of higher oil content. Also in a step of producing the oily food in the present application, when subjected to a conching step, the food is first in the "dry state", but since an oil content is lower than that of the conventional oily food, this "dry state" is maintained long.

By maintaining the "dry state" at this low oil content long, usually for 30 minutes or longer as described above, a flake is collected into unity, and transitions into the "wet state" via the state having plasticity, called "generally wet state" which is the state of generating plasticity.

An oil content at dry conching is not higher than an oil content of a final oily food in both of the conventional products and the present invention, and in order to adjust to an oil content of a final oily food, a fat or oil raw material is additionally added frequently (named oil addition). When oil addition is performed in the "dry state", a dough in the "dry state" tends to transition into the "wet state" at once.

Also in the present application, when oil addition is necessary, since conching in the "dry state" contributes to an oily food having a low viscosity when an oil content is comparable as compared with conventional, or an oil content when a viscosity is comparable as compared with conventional, it is desirable to avoid oil addition in the "dry state", and perform oil addition after transition into at least in the "generally wet state", desirably in the "wet state". A step after transition into the wet state is the same as a conching step of the conventional oily food, and the step may be conveniently carried out by the previously known method.

In addition, the present inventors have made clear that a relationship between an oil content x and a viscosity y can be approximated to an exponential function $y = ax^b$, and further, a relationship between an addition amount of PGPR(c) and a viscosity is not reduced linearly in proportion with an added amount, as an added amount is increased, the effect thereof is gradually attenuated and, when approximately 1% is added, the decreasing effect reaches a peak, and a viscosity is hardly reduced even when more is added. That is, c can approximate decrease in a viscosity y accompanied with an added amount, and attenuation thereof, by incorporating into the exponent of the exponential function determining a constant a in the function. From the above finding, a dough of the oily food obtained in the present invention has a lower viscosity than the viscosity y of a corresponding oil content x expressed by the following equation

at 45°C.

$$\text{Equation: } y = ax^b,$$

wherein y: viscosity (p), x: oil content (% by weight),

a:

$$(0.2 + 2.8\exp(-6c)) \times 10^{16}$$

b: -9.4
c: polyglycerin-condensed ricinoleic acid ester (PGPR) contained in oily food (% by weight)

Since the effect can be exerted at a lower viscosity if the oily food has a comparable oil content as compared with the conventional oil food, or at a lower oil content if the oily food has a comparable viscosity as compared with the conventional oily food, a final oil content of the oily food cannot be specified, but a relationship between a viscosity and an oil content becomes on a lower viscosity side than a particular curve.

In the oily food sufficiently exerting this effect of the present invention, it is preferable that a value of "a" is $(0.2 + 2.8\exp(-6c)) \times 10^{16}$, more desirably $(0.2 + 1.5\exp(-6c)) \times 10^{16}$, most desirably oil containing $(0.2 + \exp(-6c)) \times 10^{16}$. As a value of "a" is smaller, a viscosity can be lower if the oily food has a comparable oil content, or an oil content can be lower if the oily food has a comparable viscosity. In this regard, a granularity of the oily food is 30 $\mu$m or less. Since as a granularity of the oily food becomes coarser, a total surface area of a particle is reduced, a viscosity is easily dropped without using the effect of the present invention, and among others, the oily food having a granularity of more than 30 $\mu$m easily gives a rough feeling in an oral cavity at eating. When melting in the mouth as the oily food, particularly as chocolates is desired, it is preferable that a granularity thereof is 27 $\mu$m or less, desirably 25 $\mu$m or less, most desirably 22 $\mu$m or less.

In addition, a method of measuring a granularity is generally a method of using a micrometer as described above, and the measuring method with a micrometer is used also for defining a granularity of the present definition.

When a region showing by this curve is indicated in a specific product, in the case of C = 0, the region is a region in which a viscosity is 70 p or less at an oil content of 36% by weight or less, a viscosity is 160 p or less at an oil content of 33% by weight or less, a viscosity is 391 p or less at an oil content of 30% by weight or less, a viscosity is 1053 p or less at an oil content of 27% by weight or less, in the case of $0 < C \le 0.2$, the region is a region in which a viscosity is 25 p or less at an oil content of 36% by weight or less, a viscosity is 56 p or less at an oil content of 33% by weight or less, a viscosity is 136 p or less at an oil content of 30% by weight or less, a viscosity is 366 p or less at an oil content of 27% by weight or less, and in the case of $0.2 < C \le 0.4$ or less, the region is a region in which a viscosity is 11 p or less at an oil content of 35% by weight or less, a viscosity is 24 p or less at an oil content of 33% by weight or less, a viscosity is 59 p or less at an oil content of 30% by weight or less, a viscosity is 159 p or less at an oil content of 27% by weight or less.

Further, a chocolate exhibits a plastic (Bingham) fluid, and has property that, even when a shearing force is applied, it does not instantly flow, and when a stress exceeds a certain shearing stress (yield value), it first begins to flow, and thereafter, a shearing rate and a shearing stress are proportional.

Thereupon, a relationship between shearing stress, shearing rate, and viscosity is indicated by the following Casson equation:

$$(\tau)^{0.5} = (\eta_\infty)^{0.5} \times (D)^{0.5} + (\tau_0)^{0.5}$$

*$\tau$: shearing stress, D: shearing rate
$\eta_\infty$: plastic viscosity (a viscosity when a shearing rate is infinity)
$\tau_0$: yield value,
wherein $(D)^{0.5}$ means that D is raised to the power 0.5, that is, a root of D.

It has also been revealed that the viscosity decrease due to PGPR contributes to decrease in a yield value, but scarcely influences on a plastic viscosity.

In addition, a relationship between an oil content x and a plastic viscosity y' can be approximated to an exponential function $y' = ax^b$. From the above finding, a dough of the oily food obtained in the present invention has a lower viscosity than a plastic viscosity y' of a corresponding oil content x expressed by the following equation at 45°C.

$$\text{Equation: } y' = ax^b,$$

wherein y': plastic viscosity (p), x: oil content (% by weight)

a:

$$2.5 \times 10^{11}$$

b: -5.43

Since the effect can be exerted at a lower plastic viscosity if the oily food has a comparable oil content, or at a lower oil content if the food has a comparable plastic viscosity, as compared with the conventional oily food, a final oil content of the oily food cannot be specified, but a relationship between a plastic viscosity and an oil content becomes on a lower plastic viscosity side than a particular curve.

In the oily food which sufficiently exerts this effect of the present invention, it is preferable that a value of "a" is $2.5 \times 10^{11}$, more desirably $2.3 \times 10^{11}$, most desirably oil containing $2.0 \times 10^{11}$. As a value of "a" is smaller, the oily food can have a lower plastic viscosity if the food has a comparable oil content, or a lower oil content if the food has a comparable plastic viscosity.

In addition, for the same reason as that of the viscosity, it is necessary that a granularity of the oily food is 30 $\mu$m or less, and it is preferable that the granularity is desirably 25 $\mu$m or less, most desirably 22$\mu$ m or less.

When a region indicated by this curve is shown in a specific product, a region in which a plastic viscosity is 886 p or less at an oil content of 36% by weight, a plastic viscosity is 1420 p or less at an oil content of 33% by weight, a plastic viscosity is 2383 p or less at an oil content of 30% by weight, and a plastic viscosity is 4223 p or less at an oil content of 27% by weight corresponds to it.

The above oily product cannot be realized by the conventional methods, or if only an oil content can be comparable to that of the present invention, the oily food has a high viscosity and can be used only in limited utility, and it is difficult to realize an oily food on a lower viscosity side, or a lower plastic viscosity side than the above described curve by the existing technique.

Examples

The following Examples illustrate the present invention in more detail below, but the concept of the present invention is not limited by the following Examples. In Examples, % and part mean a weight basis.

<Example 1, Comparative Example 1>

-Making of roll flake

Cocoa, sugar, lactose, sucrose fatty acid ester (manufactured by Ryoto Co,. Ltd.), whole milk powder, cocoa butter, and emulsifier were blended into cacao mass which had been melted according to <roll refiner placement dough formulation> of Table 1, the mixture was stirred with a mixer (AM30 manufactured by Aicohsha Manufacturing Co., Ltd.) to such an extent that the mixture became a dough (8 to 10 min.) to make a roll refiner placement dough, and the roll refiner placement dough was ground with a roll refiner ("Three-roll mill SDY-300" manufactured by BUHLER) to obtain a roll flake.

-Conching

The resulting roll flake was subjected to dry conching with a conching machine (manufactured by Sanei Manufacturing Co., Ltd.) at a temperature described in Table 1 for 120 minutes, subsequently oil addition was performed according to Table 1 and, thereafter, liquid conching was performed for 180 minutes to obtain a final oily food.

A viscosity of the oily food was measured at 40°C (with a BH-type viscometer, No.5 rotor, 10 rpm, manufactured by Tokyo Keiki Inc.).

In addition, a plastic viscosity was calculated by measuring a shearing rate and a shearing stress with a B-type viscometer (BROOKFIELD Model DV-III) at 45°C when a rotation speed was changed at 12.5 (rpm), 37.5, 62.5, 87.5, 112.5, 137.5, 162.5, 187.5, or 212.5, and extrapolating this into the Casson equation.

In addition, a granularity of the oily food was measured by a method described in [Best Mode for Carrying Out the Invention], and a granularity of all the oily foods was 22 μm.

<Comparative Example 2>

According to Table 1, in Comparative Example 2, oil addition was further performed on the final product obtained in Comparative Example 1 until a viscosity thereof became a comparable viscosity to that of Example 1. A granularity measured by the same method as that of Example 1 was 22 μm.

<Table 1>

| | Example 1 | Comparative Example 1 | Comparative Example 2 |
|---|---|---|---|
| <Roll refiner placement dough formulation> * Unit is part by weight. | | | |
| Cacao mass | 13.0 | 13.0 | 13.0 |
| Cocoa | 6.0 | 6.0 | 6.0 |
| Sugar | 32.5 | 32.5 | 32.5 |
| Lactose | 20.0 | 20.0 | 20.0 |
| Whole milk powder | 5.5 | 5.5 | 5.5 |
| Cocoa butter | 11.1 | 16.8 | 16.8 |
| Lecithin | 0.0 | 0.0 | 0.0 |
| Sucrose fatty acid ester | 0.2 | 0.2 | 0.2 |
| <Dry conching condition> | | | |
| Oil content (%) | 23.0 | 27.7 | 27.7 |
| Oil-containing raw material solid content ratio (relative to oil) | 0.75 | 0.59 | 0.59 |
| Temperature (°C) | 60 | 60 | 60 |
| <Oil addition formulation> * Unit is part by weight. | | | |
| Cocoa butter | 11.9 | 6.2 | 10.5 |
| Lecithin | 0.3 | 0.3 | 0.3 |
| PGPR | 0.0 | 0.0 | 0.0 |
| Final oil content (%) | 32.2 | 32.2 | 35.0 |
| Viscosity (P) | 150 | 265 | 170 |
| Plastic viscosity (P) | 1334 | 2413 | 1458 |
| * Oil-containing raw material solid content ratio (relative to oil) = (solid content derived from oil-containing raw material)/(total oil content of dough at initiation of conching step) | | | |

Example 1 and Comparative Example 1 were the same in formulation of a finally obtained oily food and temperature condition of dry conching, but in Example 1 having a lower oil content at dry conching, a viscosity was reduced to around 60% as compared with Comparative Example 1 when final products were compared.

From this, it was clear that dry conching at a lower oil content greatly contributed to reduction in a viscosity.

Comparative Example 2 is an oily food made by the conventional method having a comparable viscosity to that of Example 1 at the final product, but its final oil content was increased to 35%.

From this, it was clear that, by using the present invention, an oily food of a final product having a lower oil content if the food has a comparable viscosity, or a lower viscosity if the food has a comparable oil content was obtained.

<Example 2, Comparative Example 3>

According to the same formulation and the same procedure as those of Example 1/Comparative Example 1 except that 0.4% by weight of PGPR (polyglycerin-condensed ricinoleic acid ester, "CRS-75" manufactured by Sakamoto Yakuhin Kogyo Co., Ltd.) known to have the effect of decreasing a viscosity at oil addition of Example 1/Comparative Example 1 was added, oily foods of final products of Example 2 and Comparative Example 3 were obtained. A viscosity of the oily food of the final product was measured by the same method as that of Example 1, and is also shown in Table 2. In addition, a granularity measured by the same method as that of Example 1 was 22 μm in both foods.

<Table 2>

|  | Example 2 | Comparative Example 3 |
|---|---|---|
| <Roll refiner placement dough formulation> * Unit is part by weight. | | |
| Cacao mass | 13.0 | 13.0 |
| Cocoa | 6.0 | 6.0 |
| Sugar | 32.5 | 32.5 |
| Lactose | 20.0 | 20.0 |
| Whole milk powder | 5.5 | 5.5 |
| Cocoa butter | 11.1 | 16.8 |
| Lecithin | 0.0 | 0.0 |
| Sucrose fatty acid ester | 0.2 | 0.2 |
| <Dry conching condition> | | |
| Oil content (%) | 23.0 | 27.7 |
| Oil-containing raw material solid content ratio (relative to oil) | 0.75 | 0.59 |
| Temperature (°C) | 60 | 60 |
| <Oil addition formulation> * Unit is part by weight. | | |
| Cocoa butter | 11.9 | 6.2 |
| Lecithin | 0.3 | 0.3 |
| PGPR | 0.4 | 0.4 |
| Final oil content (%) | 32.2 | 32.2 |
| Viscosity (P) | 22 | 37 |
| Plastic viscosity (P) | 1288 | 2390 |

Example 2 and Comparative Example 3 were the same in formulation of the finally obtained oily food, and temperature condition of dry conching, but in Example 2 having a lower oil content at dry conching, a viscosity was reduced to around 60% as Comparative Example 3 when final products were compared.

In addition, it was shown that, in Example 2 and Comparative Example 3, a viscosity was reduced by the effect of PGPR, respectively, but Example 2 using the effect of the present invention could further reduce a viscosity as compared with Comparative Example 3.

From this, it was clear that dry conching at a low oil content greatly contributed to reduction in a viscosity.

<Example 3, Example4, Example 5>

-Making of roll flake

Cocoa, sugar, lactose, sucrose fatty acid ester (manufactured by Ryoto Co,. Ltd.), whole milk powder, cocoa butter, and emulsifier were blended into cacao mass which had been melted according to <roll refiner placement dough formulation> of Table 3, the mixture was stirred with a mixer to such an extent that the mixture became a dough to make a roll refiner placement dough, and the roll refiner placement dough was ground with a roll refiner to obtain a roll flake.

-Conching

The resulting roll flake was subjected to dry conching with a conching machine (manufactured by Sanei Manufacturing Co., Ltd.) at a temperature described in Table 3 for 120 minutes, subsequently oil addition was performed according to Table 3 and, thereafter, liquid conching was performed for 180 minutes to obtain a final oily food.

Subsequently, in Example 4, according to the same steps as those of Example 3 except that lecithin was not added at a stage of a dough to be placed into a roll refiner, and temperature condition of dry conching was 45°C, roll refiner and conching were performed to obtain an oily food (lecithin which had not been added at a stage of placement into a roll refiner was added together with lecithin in oil addition, so that the same amount of lecithin was blended in a final product).

In addition, in Example 5, in accordance with Table 3, roll refiner and conching were performed to obtain an oily food according to the same steps as those of Example 2 except that an oil content at dry conching was 21% by weight, and 17% by weight. In addition, granularities measured by the same method as that of Example 1 were all 22 μm.

<Table 3>

| | Example 3 | Example 4 | Example 5 |
|---|---|---|---|
| <Roll refiner placement dough formulation><br>* Unit is part by weight. | | | |
| Cacao mass | 21.0 | 21.0 | 21.0 |
| Cocoa | 9.0 | 9.0 | 9.0 |
| Sugar | 39.7 | 39.7 | 39.7 |
| Lactose | 14.0 | 14.0 | 14.0 |
| Whole milk powder | 2.5 | 2.5 | 2.5 |
| Cocoa butter | 11.8 | 11.8 | 6.8 |
| Lecithin | 0.1 | 0.0 | 0.0 |
| Sucrose fatty acid ester | 0.2 | 0.2 | 0.2 |
| <Dry conching condition> | | | |
| Oil content (%) | 25.0 | 25.0 | 21.0 |
| Oil-containing raw material solid content ratio (relative to oil) | 0.77 | 0.77 | 0.97 |
| Temperature (°C) | 60 | 45 | 45 |
| <Oil addition formulation> * Unit is part by weight. | | | |
| Cocoa butter | 2.0 | 2.0 | 6.0 |
| Lecithin | 0.2 | 0.3 | 0.3 |
| PGPR | 0.4 | 0.4 | 0.4 |
| Final oil content (%) | 27.0 | 27.0 | 27.0 |
| Viscosity (P) | 136 | 105 | 56 |

(continued)

| <Oil addition formulation> * Unit is part by weight. | | | |
|---|---|---|---|
| Plastic viscosity (P) | 2322 | 3120 | 2192 |

Example 3 and Example 4 were the same in formulation of the finally obtained oily food, and an oil content at dry conching, but in Example 4 in which a temperature of dry conching was lowered from 60°C to 45°C, and further, lecithin was not added at dry conching, that is, a strong shear was applied at dry conching, a viscosity was reduced to 80% or less as compared with Example 3 when final products were compared.

In addition, Example 4 and Example 5 were the same in formulation of the finally obtained oily food, and temperature condition at dry conching, but in Example 4 in which an oil content at dry conching was further reduced to 21% by weight, that is, a strong shear was applied at dry conching, a viscosity was reduced to around 50% as compared with Example 4 when final products were compared.

From this, it was clear that decrease in lecithin upon dry conching, and lowering of a temperature also particularly greatly contributed to reduction.

<Example 6>

In accordance with Table 4, in Example 6, according to the same steps as those of Example 5 except that sucrose fatty acid ester was not added at a stage of a dough to be placed into a roll refiner, roll refiner and conching were performed to obtain an oily food.

<Example 7>

In accordance with Table 4, in Example 7, according to the same steps as those of Example 5 except that sucrose fatty acid ester was not added at a stage of a dough to be placed into a roll refiner, but was added to a dough at a stage of completion of conching, roll refiner and conching were performed to obtain an oily food.

For comparison, formulation and physical property of Example 5 were also described, and a viscosity of the oily food of the final product was measured by the same method as that of Example 1, and was also shown in Table 4. In addition, a granularity measured by the same method as that of Example 1 was 22 $\mu$m in both of Example 6 and Example 7.

<Table 4>

| | Example 5 | Example 6 | Example 7 |
|---|---|---|---|
| <Roll refiner placement dough formulation> * Unit is part by weight. | | | |
| Cacao mass | 21.0 | 21.0 | 21.0 |
| Cocoa | 9.0 | 9.0 | 9.0 |
| Sugar | 39.7 | 39.7 | 39.7 |
| Lactose | 14.0 | 14.0 | 14.0 |
| Whole milk powder | 2.5 | 2.5 | 2.5 |
| Cocoa butter | 6.8 | 3.8 | 3.8 |
| Lecithin | 0.0 | 0.0 | 0.0 |
| Sucrose fatty acid ester | 0.2 | 0.0 | 0.0 |
| <Dry conching condition> | | | |
| Oil content (%) | 21.0 | 21.0 | 21.0 |
| Oil-containing raw material solid content ratio (relative to oil) | 0.97 | 1.14 | 1.14 |
| Temperature (°C) | 45 | 45 | 45 |

(continued)

| <Oil addition formulation> * Unit is part by weight. | | | |
|---|---|---|---|
| Cocoa butter | 6.0 | 6.0 | 6.0 |
| Lecithin | 0.3 | 0.3 | 0.3 |
| Sucrose fatty acid ester | 0.0 | 0.0 | 0.2 |
| PGPR | 0.4 | 0.4 | 0.4 |
| Final oil content (%) | 27.0 | 27.0 | 27.0 |
| Viscosity (P) | 56 | 84 | 76 |
| Plastic viscosity (P) | 2192 | 3250 | 3008 |

Example 5 and Example 6 were the same in the condition such as formulation, a temperature and the like except that sucrose fatty acid ester was present at dry conching, but Example 6 was not as excellent as Example 5. On the other hand, a viscosity was 30% or more higher in Example 7 than in Example 6 having entirely the same formulation. From this, it was clear that a sugar ester greatly contributed to reduction in a viscosity by adding at dry conching.

From this, it was clear that the presence of sucrose fatty acid ester upon dry conching further contributed to reduction in a viscosity.

<Example 8>

In accordance with Table 5, in Example 8, according to the same steps as those of Example 1 except that an oil content at dry conching was further reduced to 22% by weight, temperature condition at dry conching was 45°C and, further, PGPR was added at 0.4% by weight, roll refiner and conching were performed to obtain an oily food. In addition, a granularity measured by the same method as that of Example 1 was 22 $\mu$m.

For comparison, formulation and physical property of Example 1 and Comparative Example 1 were also described.

<Table 5>

| | Example 1 | Comparative Example 1 | Example 8 |
|---|---|---|---|
| <Roll refiner placement dough formulation> * Unit is part by weight. | | | |
| Cacao mass | 13.0 | 13.0 | 13.0 |
| Cocoa | 6.0 | 6.0 | 6.0 |
| Sugar | 32.5 | 32.5 | 32.5 |
| Lactose | 20.0 | 20.0 | 20.0 |
| Whole milk powder | 5.5 | 5.5 | 5.5 |
| Cocoa butter | 11.1 | 16.8 | 9.9 |
| Lecithin | 0.0 | 0.0 | 0.0 |
| Sucrose fatty acid ester | 0.2 | 0.2 | 0.2 |
| <Dry conching condition> | | | |
| Oil content (%) | 23.0 | 27.7 | 22.0 |
| Oil-containing raw material solid content ratio (relative to oil) | 0.75 | 0.59 | 0.80 |
| Temperature (°C) | 60 | 60 | 45 |

(continued)

| <Oil addition formulation> * Unit is part by weight. | | | |
|---|---|---|---|
| Cocoa butter | 11.9 | 6.2 | 13.1 |
| Lecithin | 0.3 | 0.3 | 0.3 |
| PGPR | 0.0 | 0.0 | 0.4 |
| Final oil content (%) | 32.2 | 32.2 | 32.2 |
| Viscosity (P) | 150 | 265 | 20 |
| Plastic viscosity (P) | 1334 | 2413 | 754.7 |

Example 8 and Comparative Example 1 were all the same except that PGPR was added in formulation of the finally obtained oily food, but in Example 8 in which an oil content was low and a temperature was low at dry conching, that is, a strong shear was applied at dry conching, a viscosity was reduced to 10% or less as compared with Comparative Example 1 when final products were compared.

A relationship between the final oil content and the viscosity of the foregoing Examples and Comparative Examples as well as the existing oily foods was shown in Fig. 6 in the case of PGPR = 0, and in Fig.7 in the case of PGPR = 0.4, and a relationship between the final oil content and the plastic viscosity was shown in Fig.8.

<Fig.6>

Final oil content (%)

Relational equation $y = ax^b$

y: viscosity (p)
x: oil content (% by weight)
a:

$$(0.2 + 2.8\exp(-6c)) \times 10^{16}$$

b: -9.4
c: PGPR (% by weight) = 0

<Fig.7>

Relational equation $y = ax^b$

y: viscosity (p)
x: oil content (% by weight)
a:

$$(0.2+2.8\exp(-6c)) \times 10^{16}$$

b: -9.4
c: PGPR (% by weight) = 0.4

<Fig.8>

Relational equation $y' = ax^b$

y': plastic viscosity (p)
x: oil content (% by weight)
a:

$$2.5 \times 10^{11}$$

b: -5.43

Indication is both logarithmic graph in all of Fig.6, Fig.7 and Fig.8.
Examples using the technique of the present invention could clearly reduce a viscosity even at a comparable oil content when compared with Comparative Examples having the similar formulation, and Examples were less than a value of the relational equation $y = ax^b$ (wherein a and b are predetermined values at respective addition amounts of PGPR), that is, a value of "viscosity/final oil content (PGPR = 0)" in the case of PGPR = 0, or a value of "viscosity/final oil content (PGPR = 0.4)" in the case of PGPR = 0.4, and Comparative Examples obtained by the existing technique were not less than the relational equation $y = ax^b$.

Similarly, Examples using the technique of the present invention could clearly reduce a plastic viscosity even at a comparable oil content when compared with Comparative Examples having the similar formulation, and Examples were less than a value of the relational equation $y' = ax^b$ (wherein a and b are predetermined values), that is, a value of "plastic viscosity/final oil content", and Comparative Examples obtained by the existing technique were not less than the relational equation $y' = ax^b$.

Industrial Applicability

According to the present invention, an oily food having a low viscosity relative to an oil content, and having excellent taste, physical property and coating aptitude, which has not previously been seen, can be produced by a simple method.

**Claims**

1.  A method for producing an oily food, **characterized in that** an oil content of a dough to be supplied to refining is less than 25% by weight, and a ratio of a non-oil solid content derived from an oil-containing raw material relative to a total oil content at initiation of a conching step is 0.6 or more.

2.  The method for producing an oily food according to claim 1, wherein the oil-containing raw material is one or more raw material selected from the group consisting of a cacao mass, a whole milk powder, a cocoa powder, and a toasted soybean flour.

3.  The method for producing an oily food according to any one of claims 1 to 2, wherein the oil-containing raw material is added after transition of the dry state into the generally wet state, in the conching step.

4.  The method for producing an oily food according to any one of claims 1 to 3, wherein lecithin and/or polyglycerin-condensed ricinoleic acid ester (PGPR) is added after transition of the dry state into the generally wet state, in the conching step.

5.  The method for producing an oily food according to any one of claims 1 to 4, wherein sucrose fatty acid ester is added before initiation of the conching step.

6.  An oily food, **characterized in that** a viscosity (unit: p (poise)) of a dough of the oily food at 40°C is lower than a viscosity y of a corresponding oil content x expressed by the following equation: $y = ax^b$, wherein

    y: viscosity (p)
    x: oil content (% by weight)
    a:

$$(0.2 + 2.8\exp(-6c)) \times 10^{16}$$

    b: -9.4
    c: polyglycerin-condensed ricinoleic acid ester (PGPR) contained in oily food (% by weight),
    provided that a granularity of the oily food is 30 $\mu$m or less.

7.  An oily food, **characterized in that** a plastic viscosity (unit: p (poise)) of a dough of the oily food at 45°C is lower than a viscosity y of a corresponding oil content x expressed by the following equation: $y' = ax^b$, wherein

    y': plastic viscosity (p)
    x: oil content (% by weight)
    a:

$$2.5 \times 10^{11}$$

b: -5.43,
provided that a granularity of the oily food is 30 $\mu$m or less.

## INTERNATIONAL SEARCH REPORT

| International application No. |
|---|
| PCT/JP2008/073358 |

A. CLASSIFICATION OF SUBJECT MATTER
*A23G7/00(2006.01)i*

According to International Patent Classification (IPC) or to both national classification and IPC

B. FIELDS SEARCHED

Minimum documentation searched (classification system followed by classification symbols)
A23G7/00

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| Y<br>A | JP 11-113494 A (Kao Corp.),<br>27 April, 1999 (27.04.99),<br>Claims; Par. Nos. [0003], [0006]<br>(Family: none) | 1-5<br>6,7 |
| Y<br>A | JP 10-099022 A (Fuji Oil Co., Ltd.),<br>21 April, 1998 (21.04.98),<br>Claims; Par. No. [0016]; examples<br>(Family: none) | 1-5<br>6,7 |
| Y<br>A | JP 8-504576 A (Hershey Foods Corp.),<br>21 May, 1996 (21.05.96),<br>Claims; examples<br>& US 5464649 A        & US 5709903 A<br>& EP 667746 A        & WO 1994/009649 A1 | 1-5<br>6,7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 February, 2009 (16.02.09) | Date of mailing of the international search report<br>24 February, 2009 (24.02.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/073358

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 2004/062384 A1  (Fuji Oil Co., Ltd.),<br>29 July, 2004 (29.07.04),<br>Claims<br>& US 2006/0134304 A1    & EP 1584244 A1 | 1-5<br>6,7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63301745 A
- JP 1137939 A
- JP 1252248 A
- JP 4237458 A
- JP 4356159 A
- JP 4325055 A
- JP 4346751 A
- JP 5260894 A
- JP 6506586 A
- JP 8504576 A
- JP 10099022 A